# EUROPEAN PATENT APPLICATION

(11) **EP 2 562 741 A1**
(43) Date of publication of application: **27.02.2013**
(21) Application number: 11194345.2
(22) Date of filing: 19.12.2011
(51) Int. Cl.: G09G 3/00, G02B 26/08, H01L 41/09, G06F 3/01, G09G 3/34

(54) **Apparatus and method for controlling a flexible display**

(30) Priority: 25.08.2011 KR 20110085121
(71) Applicant: Pantech Co., Ltd, Mapo-gu, Seoul 121-270 (KR)
(72) Inventor: Lim, Song, 121-270 Seoul (KR)
(74) Representative: Jordan, Volker Otto Wilhelm

(57) **Abstract**

A flexible display control apparatus includesa direct current-to-alternating current (DC-AC) converter to convert a DC driving voltage to an AC driving voltage having a period, a controller to determine whether to provide the DC driving voltage or the AC driving voltage to an ionic layer,a driving unit to drive cells included in the ionic layer based on the provided DC driving voltage or the AC driving voltage, and a display having a shape that is modified to correspond to an input according to the driven cells.

## Description

### CROSS-REFERENCE TO RELATED APPLICATION

This application claims priority from and the benefit under 35 USC §119(a) ofKorean Patent Application No. 10-2011-0085121, filed on August 25, 2011, which is incorporated by reference for all purposes as if fully set forth herein.

### BACKGROUND OF THE INVENTION

FIELD

Exemplary embodiments of the present invention relate to anapparatus and method for controlling a flexible display.

DISCUSSION OF THE BACKGROUND

A flexible display is a flat panel display on a substrate that is flexible, for example, thin film plastics and the like, and may display letters or images.

A shape of the conventional flexible display is modified by an external physical force. Due to this,in conventional flexible displays, there may be a limit in displaying letters or images on the flexible display.

### SUMMARY

The present disclosure is directed to a flexible display, and method for controlling the same, that alternates between voltages in order to maintain a shape of the flexible display.

Additional features of the invention will be set forth in the description which follows, and in part will be apparent from the description, or may be learned by practice of the invention.

An exemplary embodiment provides a control apparatus to control a flexible display,including: a direct current (DC)-DC converter unit to process an input and to produce DC voltage; a DC-alternating current (AC) converter unit to convert the produced DC voltage to AC voltage; a switch unit to determine a driving voltage from either the DC voltage or the AC voltage; and a driving unit to drive the flexible display with the driving voltage, wherein the flexible display has a shape modifiable by the driving voltage.

An exemplary embodiment provides method for controlling a flexible display, comprising: converting an input and producing direct current (DC) voltage from the input; converting the DC voltage to alternating current (AC) voltage; determining to apply the DC voltage or the AC voltage to the flexible display; and applying the DC voltage or the AC voltage as an applied voltage, wherein the flexible display has a shape modifiable by the applied voltage.

An exemplary embodiment provides a control apparatus to control a flexible display,including: a first voltage unit to process an input and to produce a first voltage; a second voltage unit to produce a second voltage, the second voltage having a different period than the first voltage; a switch unit to determine a driving voltage from either the first voltage or the second voltage; and a driving unit to drive the flexible display with the driving voltage, wherein the flexible display has a shape modifiable by the driving voltage.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a cross-sectional view of a flexible display according to an exemplary embodiment of the present invention.

FIG. 2 is a block diagram illustrating an operation of an ionic polymer-metal composite (IPMC) layer used in a flexible display control apparatus according to an exemplary embodiment of the present invention.

FIG. 3 is a block diagram illustrating a flexible display control apparatus according to an exemplary embodiment of the present invention.

FIG. 4 is a diagram illustrating a direct current-to-alternating current (DC-AC) converter of a flexible display control apparatus according to an exemplary embodiment of the present invention.

FIG. 5 is a diagram illustrating a structure of an IPMC layer in a flexible display control apparatus according to an exemplary embodiment of the present invention.

FIG. 6 is a diagram illustrating modification of an IPMC layer in a flexible display control apparatus according to an exemplary embodiment of the present invention.

FIG. 7 is a diagram illustrating modification of an IPMC layer in a flexible display control apparatus over time according to an exemplary embodiment of the present invention.

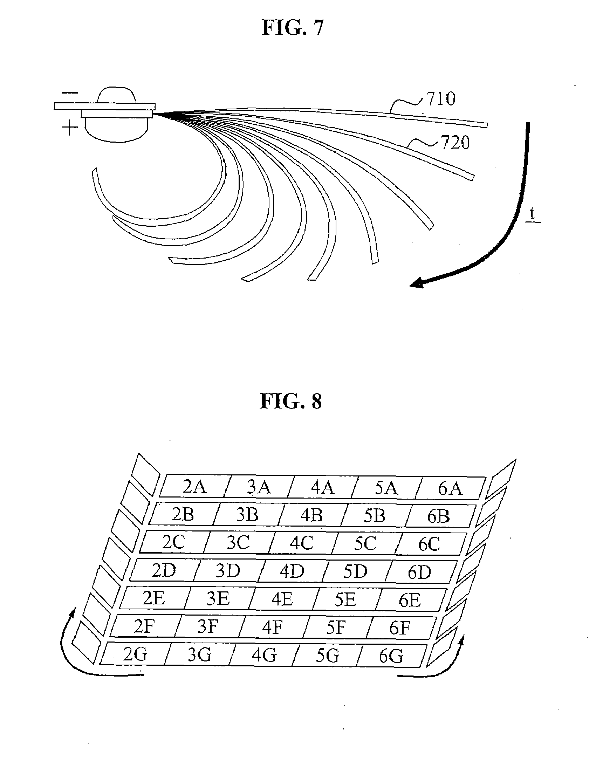

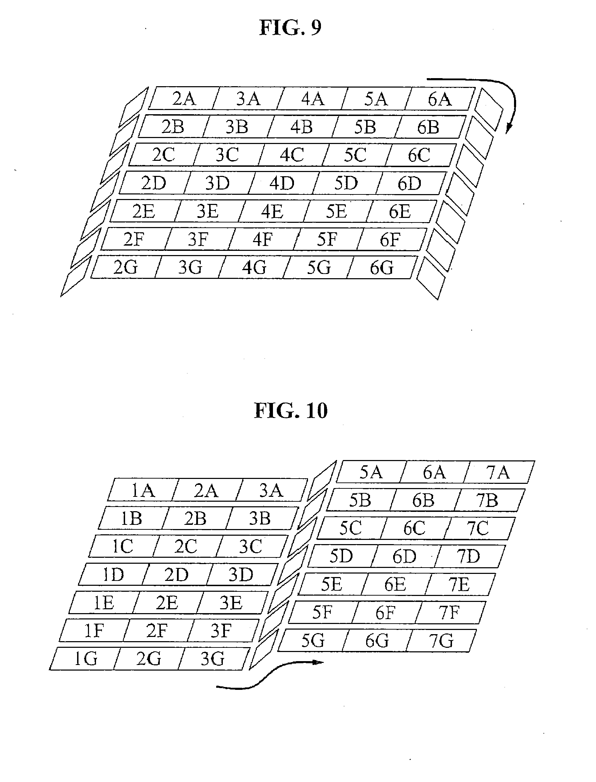

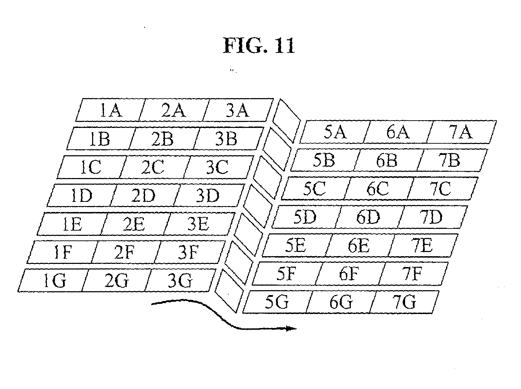

FIG. 8 is a diagram illustrating a modification of an IPMC layer in a flexible display control apparatus based on a voltage provided to the IPMC layer according to an exemplary embodiment of the present invention.FIG. 9 isa diagram illustrating a modification of an IPMC layer in a flexible display control apparatus based on a voltage provided to the IPMC layer according to an exemplary embodiment of the present invention.FIG. 10 isa diagram illustrating a modification of an IPMC layer in a flexible display control apparatus based on a voltage provided to the IPMC layer according to an exemplary embodiment of the present invention.FIG. 11 isa diagram illustrating a modification of an IPMC layer in a flexible display control apparatus based on a voltage provided to the IPMC layer according to an exemplary embodiment of the present invention.

FIG. 12 is a diagram illustrating an ON and OFF pulse signal and a sine wave signal generated by a flexible display control apparatus according to an exemplary embodiment of the present invention.

FIG. 13 is a diagram illustrating an ON and OFF pulse signal and a sine wave signal generated by a flexible display control apparatus according to an exemplary embodiment of the present invention.

FIG. 14 is a diagram illustrating a flexible display modified in a wave shape using a flexible display control apparatus according to an exemplary embodiment of the present invention.

FIG. 15 is a diagram illustrating a flexible display that displays audio rhythms using a flexible display control apparatus according to an exemplary embodiment of the present invention.

FIG. 16 is a diagram illustrating modification of a flexible display based on a period of an AC driving voltage in a flexible display control apparatus according to an exemplary embodiment of the present invention.

FIG. 17 is a flowchart illustrating a flexible display control method according to an exemplary embodiment of the present invention.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms including technical and scientific terms used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It will be understood that for the purposes of this disclosure, "at least one of X, Y, and Z" can be construed as X only, Y only, Z only, or any combination of two or more items X, Y, and Z (e.g., XYZ, XYY, YZ, ZZ).

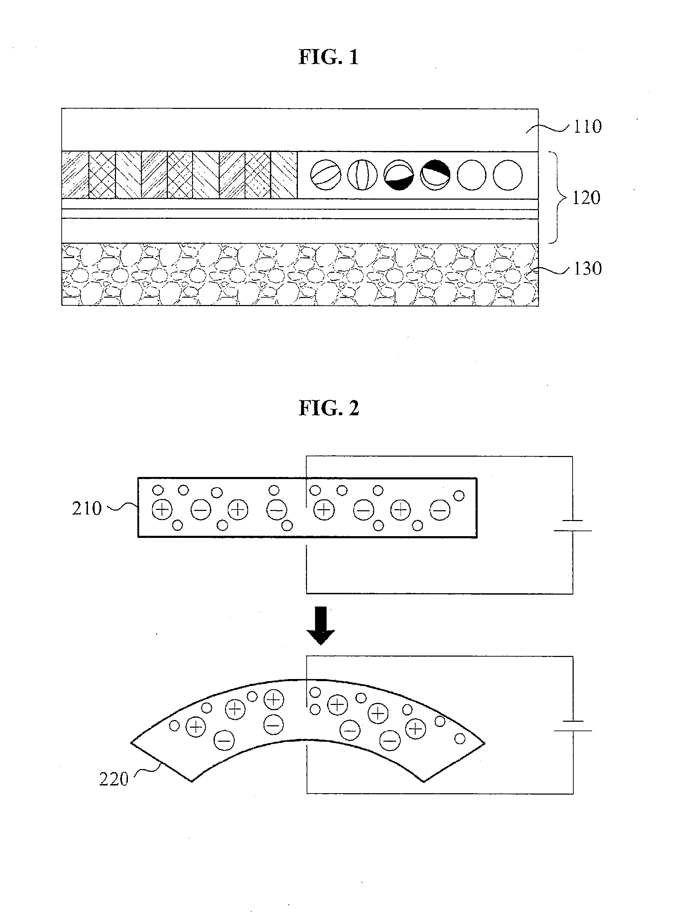

FIG. 1 illustrates a cross-sectional view a flexible display according to an exemplary embodiment of the present invention.

Referring to FIG. 1, the flexible display includes an input unit 110, a display unit 120, and a driving unit 130. The input unit 110 may receive a signal input by a user via a display window. The input unit 110 may receive a touch signal input by a touch on the display window. The touch may refer to an action by a user, or the application of a touch device, such as a stylus pen or the like. The display unit 120 may display images, letters, and the like, and a shape of the display unit 120 may be modified due to the flexible nature of the display unit 120. The driving unit 130 may modify the display unit 120,and set the shape of the display unit 120. The driving unit 130 may be an ionic layer, such as an ionic polymer-metal composite (IPMC) layer or the like. The IPMC layer may be arranged on or connected to the display unit 120. A shape of the IPMC layer may be modified according to an applied voltage. If the IPMC layer is modified, the shape of the display unit 120 may also be modified accordingly.

FIG. 2 illustrates an operation of an IPMC layer used in a flexible display control apparatus according to an exemplary embodiment of the present invention.

Referring to FIG. 2, if voltage is appliedto the IPMC layer, as shown on the upper side 210, hydrated positive ions may move towards a first electrodeas shown on the lower side 220. As the hydrated positive ions are concentrated on a side of the first electrode, a portion of the IPMC layer that is connected with the first electrodemay expand. Conversely, a portion of the IPMC layer that is connected to a second electrodemay contract. Therefore, the IPMC may bend towards the second electrode. Thus, the shape of the IPMC layer may be modified based on a polarity of a voltage applied. The first electrode and the second electrode may be represented by an anode and/or a cathode.

The IPMC layer may be a polymer film and thus, the polymer film may be damaged ifa voltage higher than or equal to a referencelevel is provided, and/or if the application of voltage is for more than a reference time. Accordingly, a lifespan of a component using the IPMC layer may be shortened.

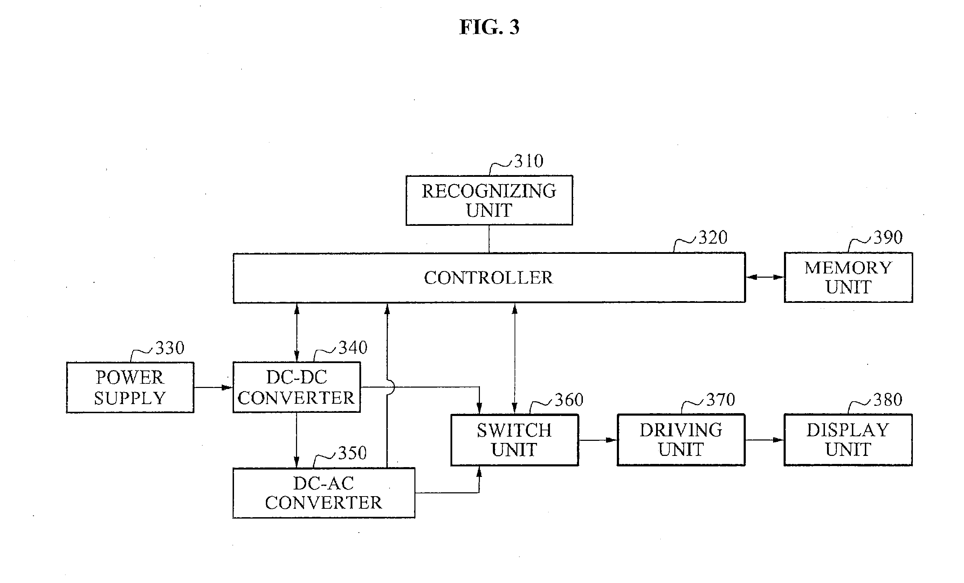

FIG. 3 illustrates a flexible display control apparatus according to an exemplary embodiment of the present invention.

Referring to FIG. 3, the flexible display control apparatus includes a recognizing unit 310, a controller 320, a direct current-to-direct current (DC-DC) converter, a direct current-to-alternating current (DC-AC) converter 350, a switch unit 360, a driving unit 370, a display unit 380, and a memory unit 390.

The DC-DC converter 340 may convert a DC voltage supplied from a power supply 330 to a DC driving voltage used to drive the driving unit 370. The DC driving voltage may refer toa DC voltage used to drive cells included in an ionic layer of the driving unit 370. Information associated with a voltage level of the DC driving voltage may be stored in the memory unit 390.

The DC-AC converter 350 may convert a DC driving voltage to an AC driving voltage having a setperiod. A peak-to-peak level of the AC driving voltage may be equivalent to a level of the DC driving voltage. In this example, the specificperiod may be determined by the controller 320. The controller 320 may determine the specific period of AC voltage to avoid deformation restoration, for example, causing the periodto be faster than a speed ofions in motion included in the IPMC layer. The controller 320 may determine the referenceperiod to avoid deformation restoration or not address the deformation restoration, with the effect being that the period may be faster or slower than the speed of ions in motion. Also, a period of an initial AC driving voltage may be stored in advance in the memory unit 390.

The controller 320 may determine if a DC driving voltage or an AC driving voltage is provided to the IPMC layer. The controller 320 may determine this based on whether a displacement restorationoccurs in the IPMC layer.

Throughout this disclosure, the term displacement restoration is used. This may refer to a complete restoration of the shape of the flexible display, or it may refer to the flexible display partially returning to its original shape.

The IPMC layer may have the following physical properties. If a DC driving voltage is provided to the IPMC layer, the IPMC layer may be modified based on the voltage. Ifa DC driving voltage is continuously provided for a reference time, the IPMC layer may not maintain the modified shape induced by the DC driving voltage and may be restored to an original shape. This restoration in a shape may be referred to as a displacement restoration. The displacement restoration may occur ifa voltage of a referencelevel is provided to the IPMC layer during a reference time.

Thus, it may be difficult to maintain the IPMC layer in a modified shape for a duration of time if applying DC driving voltage to the IPMC layer.

Ifan AC driving voltage is provided to the IPMC layer, the motion of ions of the IPMC layer may be determined based on a waveform period and a peak-to-peak level of the AC driving voltage. Movement of the IPMC layer may be determined by a change in an ion density that varies based on a change in a voltage.

In this example, ifthe AC driving voltage period changes to a period slower than a speed of the motion of ions, a shape of the IPMC layer may be modified based on the period of the AC driving voltage. Conversely, if the period of the AC driving voltage period is faster than a speed of the motions of ions, ions may not be able to conform to a change in a voltage level of the AC driving voltage that changes periodically. Therefore, the movement of the IPMC layer based on the change in the voltage level may become relatively smaller.

If the period of the AC driving voltage progresses faster than or equal to a specific period, a human eye may not recognize the movement of the IPMC layer,because the motion of the IPMC layer is faster than a human eye can process.

The controller 320 may provide, to the IPMC layer, an AC driving voltage that has a period faster than the motion of ions of the IPMC layer, therebyminimizing or reducing a displacement restoration. That is, the controller 320 may maintain the IPMC layer at a modified shape.

Ifthe controller 320 provides an AC driving voltage to the IPMC layer, with the AC driving voltage being varied, damagetoa film may be reduced. Therefore, a reliability of a component using the IPMC layer may improve, because the shape is maintained and not restored to an original position.

Before the displacement restorationoccurs, the controller 320 may be able to provide a DC driving voltage to the IPMC layer. If the DC driving voltage is provided, the IPMC layer may be modified to a specificshape more quickly than if the AC driving voltage is provided.

The controller 320 may determine whether to provide an AC driving voltage to the IPMC layer based on a time that a displacement restoration occurs. For example, the controller 320 may provide an AC driving voltage to the IPMC layer, before the time when displacement restorationoccurs.

The time of the displacement restoration occurringmay be stored in the memory unit 390. If a referencevoltage is provided to the IPMC layer, the time of the displacement restorationoccurringmay be measured experimentally, and may be stored in the memory unit 390 as data. This data may be recalled later for use in reducing or preventing the displacement restoration from occurring.

The controller 320 may sense thatdisplacement restorationoccurs, and may determine whether to provide an AC driving voltage to the IPMC layer. The controller 320 may determine a level of displacement restoration of the IPMC layer. If the level of restoration from a current shape of the IPMC layer to a shape before modification is greater than or equal to a referencevalue while a DC driving voltage is provided to the IPMC layer, the controller 320 may determine that displacement restorationoccurs. In this instance, the voltagevalue may be determined by a user, or experimentally determined as explained above. In another example, the voltage value may be provided in a memory or a database.

The controller 320 may control switches of the switch unit 360 so as to provide either a DC driving voltage output from the DC-DC converter 340 or an AC driving voltage output from the DC-AC converter 350 to individual or combination of cells of the IPMC layer. The switch unit 360 may switch the output voltage from either the DC-DC converter 340 or the DC-AC converter 350 based on a control of the controller 320. The switches may be connected with cells of the IPMC layer.

The controller 320 may determine whether to provide a DC driving voltage or an AC driving voltage based on a specific cell unit or group of cell units of the IPMC layer. The controller 320 may determine whether to provide a DC driving voltage or an AC driving voltage to a column of cells of the IPMC layer and/or a row of cells of the IPMC layer.

The controller 320 may adjust a duration inwhich a DC driving voltage or an AC driving voltage is provided, based on the amount of the IPMC layer being driven, such as a cell unit, a column unit, and/or a row unit. The amount or type of modification of a shape of the IPMC layer may be based on the duration during which a voltage is provided.

The controller 320 may determine whether to provide a DC driving voltage or an AC driving voltage based on an area unit including a plurality of cells of the IPMC layer, and modify the IPMC layer based on a recognized input.

The controller 320 may control the switch unit 360 to provide a DC driving voltage to a cell among the cells of the IPMC layer based on the recognized input, and provide an AC driving voltage to another cell. TheDC driving voltage may be provided to a cell that is modified sooner and for a shorter period of time, while the AC driving voltage may be provided fora cell that is to be modified and maintained for a longer period of time. If the AC driving voltage is provided, a speed of the motion of ions may be determined based on a period of the AC driving voltage.

The driving unit 370 may drive the cells based on DC driving voltage or AC driving voltage being provided. Thus by driving the cells, the IPMC layer is modified by the movement of the cells.

The display unit 380 may be attached on or connected to the IPMC layer and thus, a shape of the display unit 380 may be modified based on a direction in which the cells are driven.

In this example, the direction in which the cells are driven may correspond to an input of the user. Information corresponding to a shape corresponding to the information may be determined based on the controller 320 and/or the input of the user. The input of the user may be processed by the controller 320 to determine a resultant shape of the IPMC layer and/or display unit 380.

The recognizing unit 310 may recognize a signal input to a flexible display from an external location, such as a side of the device. The recognizing unit 310 may recognize an input through an application or a menu of a terminal. For example, the recognizing unit 310 may recognize an input through a menu installed in a smart phone or through an application downloaded and installed in the smart phone. The recognizing unit 310 may recognize an individual input by the user. For example, an individual input by the user may bea successive input of letters, characters or movement patterns. The individual input by the user may not be set in a terminal in advance.

If an input is based on a pattern set in advance, the controller 320 may determine a period of an AC driving voltage based on period information stored in the memory unit 390. For example, ifan input associated with a wave-shape is selected through an application, the controller 320 may determine a period of an AC driving voltage based on the period information stored in the memory unit 390 so as to modify the IPMC layer to a wave-shape. Also, ifan input is input by the user, the controller 320 may determine a period of an AC driving voltage to correspond to the input. For example, as duration of an input is lengthened, the controller 320 may control a period of an AC driving voltage to be longer.

The controller 320 may classify the input recognized by the recognizing unit 310 as an input associated with referenceinformation or as an input associated with information that is not set in advance. If the input corresponds toreferenceinformation, information corresponding to the input may be stored in the memory unit 390. Ifthe input is determined to correspond to information not set in advance, information corresponding to the input maynot be stored in the memory unit 390.

The controller 320 may search for a shape matching the referenceinformation, or information retrieved from the memory unit 390. The shape matching the reference information may be stored in the memory unit 390. The controller 320 may determine a shape with respect to the information that is not set in advance, based on strength of an input, duration of an input, a location of an input, and/or a pattern of an input. The controller 320 may enable a DC driving voltage or an AC driving voltage to be provided to cells of the IPMC layer that correspond to the shape.

The memory unit 390 may store information associated with a shape corresponding to the referenceinformation, information associated with a voltage level for each cell of the IPMC layer based on the information associated with the shape, information associated with a time that an AC driving voltage is provided, and information associated with a period of an initial AC driving voltage. An external storage that may store information may be used as the memory 390. For example, non-volatile memories, such as, a read-only memory (ROM), NOT OR (NOR) flash memory, and NOT AND (NAND) flash memory, and the like may be used.

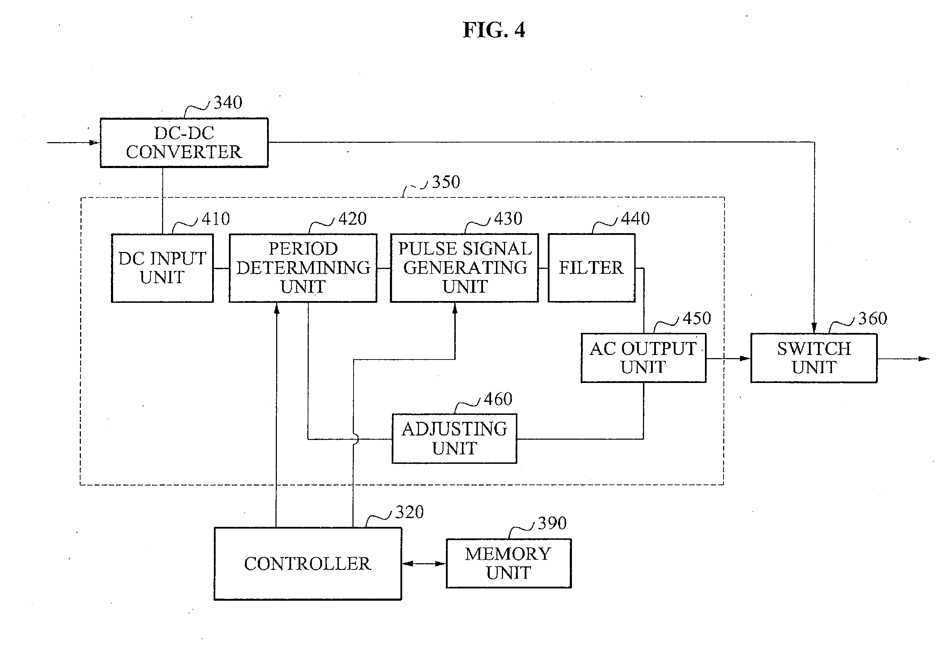

FIG. 4 illustrates aDC-AC converter of a flexible display control apparatus according to an exemplary embodiment of the present invention.

Referring to FIG. 4, the DC-AC converter 350 includes a DC input unit 410, a period determining unit 420, a pulse signal generating unit 430, a filter 440, an AC output unit 450, and an adjusting unit 460.

The DC input unit 410 may receive a DC driving voltage output from the DC-DC converter 340.

The period determining unit 420 may determine a period of an AC driving voltage based on a period corresponding to a referenceinput or a period that is variedbased on an input of a user or a determination from the controller 320. The referenceinput may correspond to aninput stored in the memory unit 390. For example, the referenceinput may indicate an input corresponding to information associated with a shape of an IPMC layer set in advance, such as one generated from an execution of an application. A period corresponding to the referenceinput may be stored in the memory unit 390 in advance. The period that variesbased on the input of the user may be determined based on a time difference between inputs, or other metrics associated with sensing, such as duration of the input or intensity of the applied input.

The period determining unit 420 may receive a period determined by the controller 320, and may use this received period for converting a DC driving voltage to an AC driving voltage.

The pulse signal generating unit 430 may convert a DC driving voltage based on the period of the period determining unit 420 so as to generate an ON and OFF pulse signal. A voltage level of the ON and OFF pulse signal may be equivalent to a voltage level of the DC driving voltage, and an ON duration and an OFF duration within one period may be determined by the controller 320. The ON duration and the OFF duration may be the same or may be different from each other. The pulse signal generating unit 430 may be a bridge converter. The controller 320 may control an ON duration and an OFF duration of the ON and OFF pulse signal, based on an ON duration and an OFF duration stored in the memory unit 390.

The filter 440 may filter an ON and OFF pulse signal to remove a harmonic wave component. The filter 440 may filter an ON and OFF pulse signal to output a sine wave signal.

The AC output unit 450 may output an ON and OFF pulse signal as an AC driving voltage or may output a filtered sine wave signal as an AC driving voltage. The controller 320 may determine whether the AC output unit 450 outputs an ON and OFF pulse signal or a sine wave signal.

The adjusting unit 460 may compare a period of an ON and OFF signal with the period determined by the period determining unit 420, and may adjust the period of the ON and OFF pulse signal based ona difference with the period determined by the period determining unit 420. The adjusting unit 460 may compare a period of a sine wave signal with the period determined by the period determining unit 420, and may adjust the period of the sine wave signal by a difference with the determined period. The adjusting unit 460 may adjust the period of the ON and OFF pulse signal or the period of the sine wave signal as a period of an AC driving voltage by the controller 320.

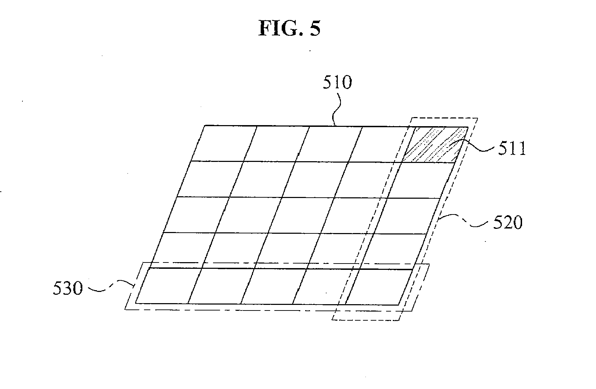

FIG. 5 illustrates a structure of an IPMC layer in a flexible display control apparatus according to an exemplary embodiment of the present invention.

Referring to FIG. 5, the IPMC layer 510 may include various cells. The flexible display control apparatus may provide an AC driving voltage to the IPMC layer 510 to minimize or reduce a displacement restoration. In this example, the IPMC layer 510 may include a cell unit 511, a column unit 520, and a row unit 530, in which an AC or DC driving voltage may be applied to.

For example, a voltage provided to a cell may be set to a value less than or equal to 7 volts (V) and a maximum pressure provided to the cell may be set to a value equivalent to 30 megapascals (Mpa). The setting may be different for each flexible display to which the IPMC layer 510 is attached or may be different for each environment where the IPMC layer 510 is placed.

The flexible display control apparatus may adjust a period of the AC driving voltage provided to the IPMC layer 510. The flexible display control apparatus may adjust a duration during which an AC driving voltage is provided to the IPMC layer 510.

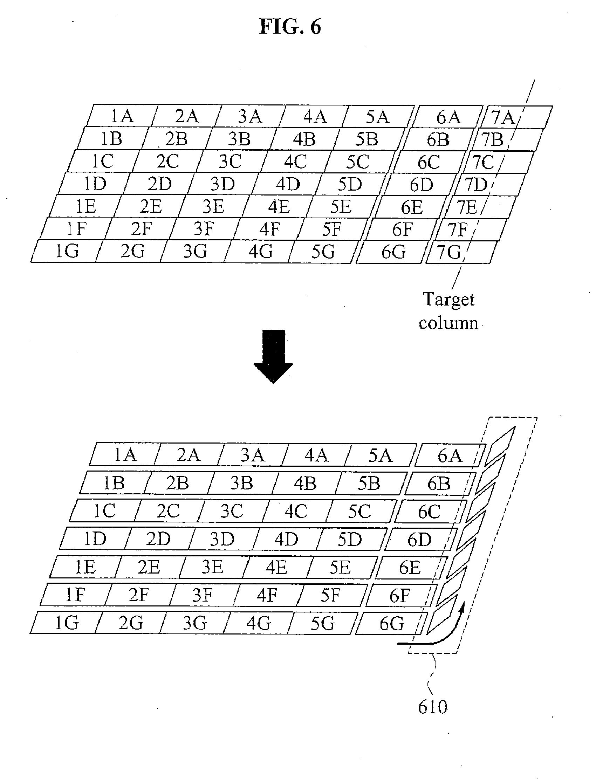

FIG. 6 illustrates modification of an IPMC layer in a flexible display control apparatus according to an exemplary embodiment of the present invention.

Referring to FIG. 6, each cell has an identification. In the same column, numbers of the identification are the same. In the same row, letters of the identification are the same. The flexible display control apparatus may provide a DC driving voltage or an AC driving voltage to cells included in the IPMC layer to drive the cells and thus, may change a shape of the IPMC layer.

Referring to FIG. 6, the shape is modified by a DC driving voltage or an AC driving voltage provided to a seventh column 610. The IPMC layer is bent toward a direction of a second electrode. This resultant bending may occur due to the application ofa positivedriving voltage to cells in the seventh column 610.

FIG. 7 illustrates modification of an IPMC layer in a flexible display control apparatus, over time, according to an exemplary embodiment of the present invention.

Referring to FIG. 7, a second electrode is placed in a lower portion of the IPMC layer and a first electrodeis placed in an upper portion of the IPMC layer. Ifa voltage provided to cells in the IPMC layer changes over time, the shape of IPMC layer may be modified.

For example, ifa voltage provided to each cell increases over time, the IPMClayer may be modified from a shape 710 to a shape 720.

FIG. 8 isa diagram illustrating a modification of an IPMC layer in a flexible display control apparatus based on a voltage provided to the IPMC layer according to an exemplary embodiment of the present invention.FIG. 9 isa diagram illustrating a modification of an IPMC layer in a flexible display control apparatus based on a voltage provided to the IPMC layer according to an exemplary embodiment of the present invention. FIG. 10 isa diagram illustrating a modification of an IPMC layer in a flexible display control apparatus based on a voltage provided to the IPMC layer according to an exemplary embodiment of the present invention.FIG. 11 isa diagram illustrating a modification of an IPMC layer in a flexible display control apparatus based on a voltage provided to the IPMC layer according to an exemplary embodiment of the present invention.

Referring to FIG. 8, a shape of an IPMC layer is modified by a voltage provided to columns onboth ends of the IPMC layer. In this example, a positive voltage is provided to the columns onboth ends of the IPMC layer.

If a DC driving voltage is provided continuously to columns of both ends for an extended period of time, the modified shape may relax or berestored to an original shape, i.e. a displacement restoration may occur. The flexible display control apparatus may provide an AC driving voltage to columns onboth ends at a time ifthe displacement restorationoccurs. In this example, a period of the AC driving voltage may progress faster than a speed of the motion of ions included in a cell. In this example, the movement of cells may not be recognizable by a human eye.

For example, columns of both ends of the IPMC layer may beraised by 45 degrees by providing a DC driving voltage of 2V.

Ifa displacement restoration occurs 10 seconds after a voltage of 2V is provided to the IPMC layer, according to a property of the IPMC layer, the flexible display control apparatus may provide a DC driving voltage of 2V to modify the IPMC layer, and may provide an AC driving voltage within 10 seconds after providing the DC driving voltage.

The provided AC driving voltage may have a peak-to-peak value of 4V, matching a level of the DC driving voltage of 2V. Ifthe provided AC driving voltage is +2V, the shape of the modified IPMC layer may be maintained. Ifthe provided AC driving voltage is 0V, the shape of the IPMC layer may be restored to an original shape, and if the provided AC driving voltage is -2V, the IPMC layer may be modified in a direction opposite to a shape if the provided AC driving voltage is +2V.

Ifa period of the AC driving voltage is set to be significantly short so that the AC driving voltage is faster than a speed of the motion of ions, this speed may not allow a shape modification. Thus, a human eye may not recognize a change. That is, if an AC driving voltage with a fast period is applied after the DC driving voltage of 2V is applied, the shape of the IPMC layer maintains a shape corresponding to the application of the DC driving of 2V.

Referring to FIG. 9, a shape of the IPMC layer is modified by a voltage provided to columns of both ends of the IPMC layer. In this example, a voltage is provided to the columns on both ends of the IPMC layer in order to bend the IPMC layer to the shape that is shown.

Referring to FIG. 10, a shape of the IPMC layer is modified by a voltage provided to a column in the center of the IPMC layer. In this example, a voltage is provided on the column in the center of the IPMC layer to produce a resulting bending of the structure.

Referring to FIG. 11, a shape of the IPMC layer is modified by a voltage provided to a column in the center of the IPMC layer. In this example, a voltage is provided to the column in the center of the IPMC layer to produce the resultant bending of the structure, the voltage being the opposite orientation of the voltage provided in FIG. 10.

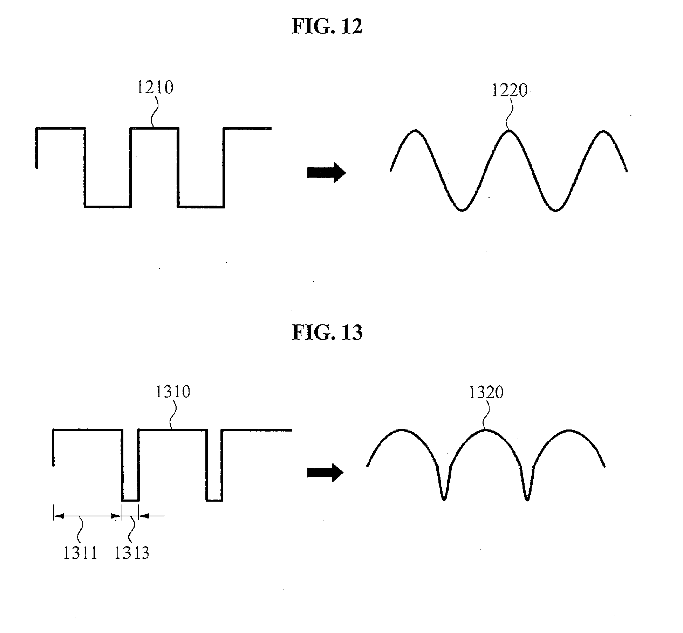

FIG. 12 illustrates an example of an ON and OFF pulse signal and a sine wave signal generated by a flexible display control apparatus according to an exemplary embodiment of the present invention.

Referring to FIG. 12, the flexible display control apparatus may generate an ON and OFF pulse signal 1210. In the ON and OFF pulse signal, an ON duration and an OFF duration is the same.

Ifthe ON duration and the OFF duration are the same, a positive voltage and a negative voltage are applied for the same amount of time within one period. Ifthe ON duration and the OFF duration are the same, the IPMC layer may be modified upward and downward, regularly. For example, if one period is one second, the IPMC layer may be modified upward during a 0.5 second period and may be modified downward during a 0.5 second period.

If the ON and OFF pulse signal 1210 passes through a filter, a sine wave signal 1220 may be output.

FIG. 13 illustrates another example of an ON and OFF pulse signal and a sine wave signal generated by a flexible display control apparatus according to an exemplary embodiment of the present invention.

Referring to FIG. 13, the flexible display control apparatus may generate an ON and OFF pulse signal 1310. In the ON and OFF pulse signal 1310, an ON duration and an OFF duration differ from each other. For example, as shown in FIG. 13, the ON duration 1311 is longer than the OFF duration 1313.

Ifthe ON duration 1311 and the OFF duration 1313 differ from each other, duration of a positive voltage may be longer than duration of a negative voltage within a period, or duration of a negative voltage may be longer than duration of a positive voltage within a period. If the ON duration 1311 or the OFF 1313 duration differs from each other, the IPMC layer may be further modified for a longer duration for either the ON duration 1311 and the OFF duration 1313. For example, if one duration is one second and duration of a positive voltage is three times longer than duration of a negative voltage, the positive voltage may be provided for a 0.75 second period and the negative voltage may be provided during a 0.25 second period.

Therefore, the IPMC layer may be modified upward during a 0.75 second period and may be modified downward during a 0.25 second period. The flexible display control apparatus may adjust the ON duration 1311 and the OFF duration 1313 to modify the IPMC layer in various shapes, using a difference of duration between the application of both the ON and OFF voltages.

If the ON and OFF pulse signal 1310 passes through a filter, a sine wave signal 1320 may be output. The shape of the sine wave signal 1320 may resemble the ON and OFF pulse signal 1310, as shown in FIG. 13.

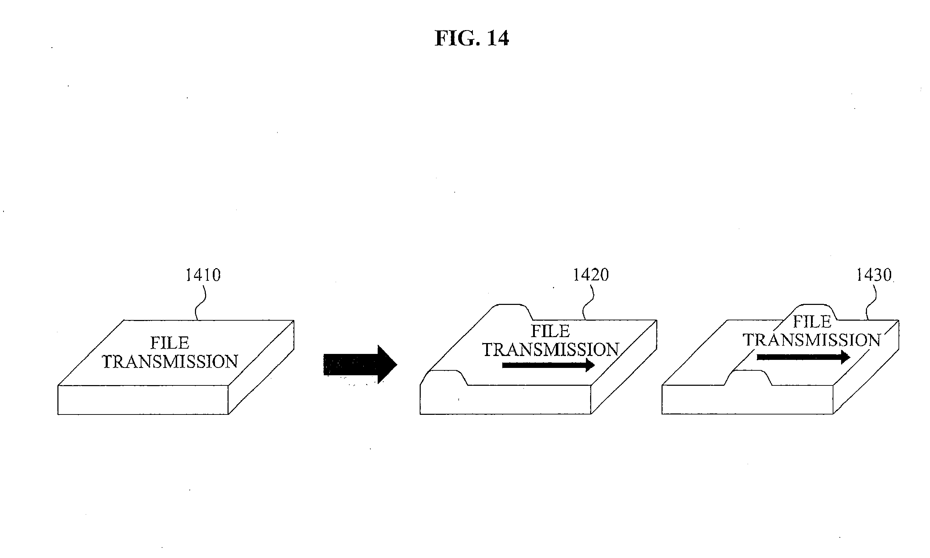

FIG. 14 illustrates a flexible display modified in a wave shape using a flexible display control apparatus according to an exemplary embodiment of the present invention.

Referring to FIG. 14, the flexible display control apparatus may adjust a period of an AC driving voltage provided to an IPMC layer so that a flexible display 1410 may be modified in a wave shape.

If a period of an AC driving voltage provided to the IPMC layer progresses slower than the motion of ions included in the IPMC layer, the flexible display 1410 may rise upward at a positive voltage and may sink downward at a negative voltage.

If an AC driving voltage having a period that progressesslower than the motion of ions is provided to the IPMC layer, the flexible display 1410 may be modified in a wave shape, such as shown by the transformation from shape 1420 to shape 1430.

The wave-shaped movement may be used for displaying a state of a download if a file is being downloaded. For example, if a download is input from a menu, the wave-shaped flexible display may be used while a file is downloaded to indicate a progress of the download. In an another example, if a storybook is played back, the wave-shaped flexible display may be used for expressing the motion of wind and the flow of waves or any action that may represent a theme or action associated with the storybook.

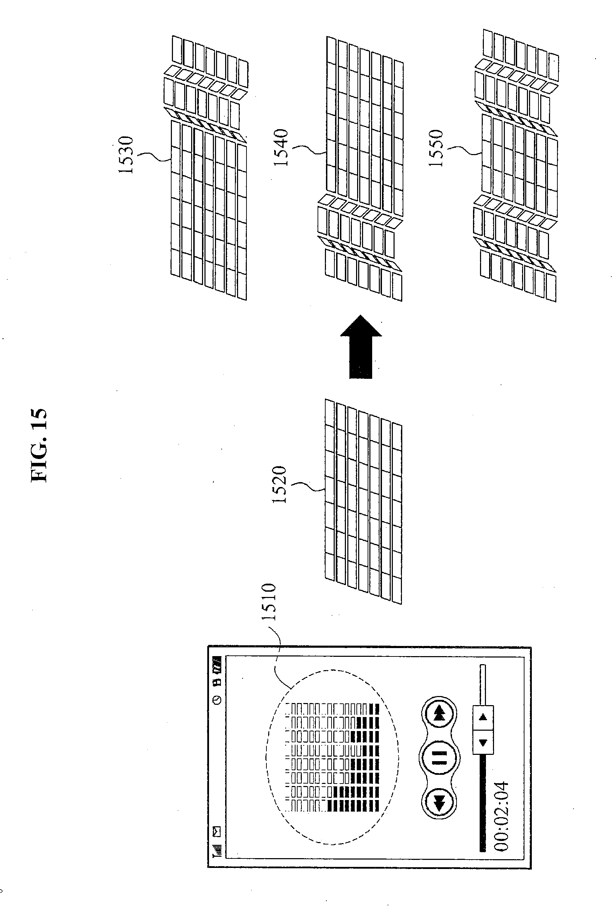

FIG. 15 illustrates a flexible display that displays audio rhythms using a flexible display control apparatus according to an exemplary embodiment of the present invention.

Referring to FIG. 15, the flexible display control apparatus may adjust a period of an AC driving voltage provided to an IPMC layer so as to modify a flexible display 1520 to resemble a flow of a wave. If music is played back in a terminal, the flexible display 1520 be modified based on audio rhythms.

If audio rhythms 1510 are displayed for each frequency band, an equalizerrepresented on the flexible display 1520 may be modified in various shapes, for example, a shape 1530, a shape 1540, and a shape 1550, based on the audio rhythms.

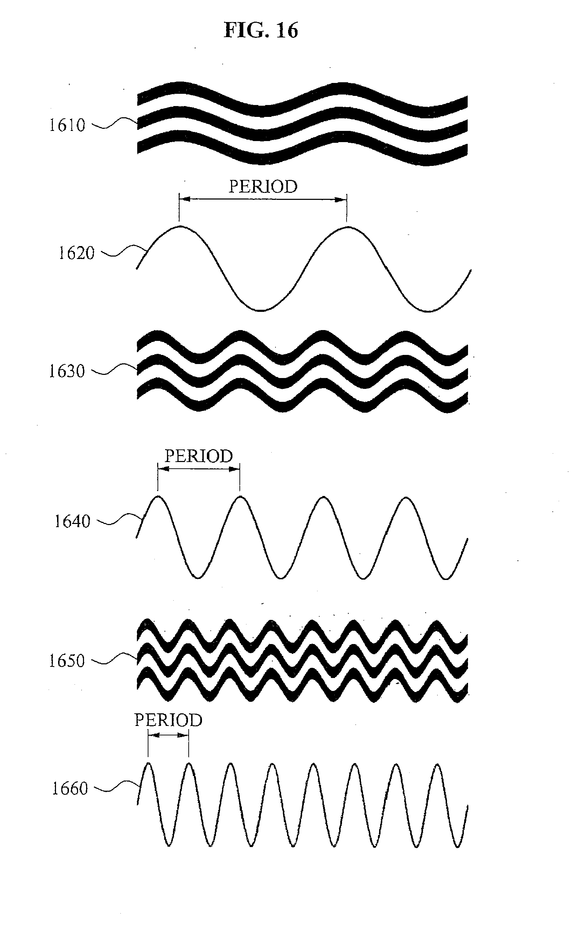

FIG. 16 illustrates modification of a flexible display based on a period of an AC driving voltage in a flexible display control apparatus according to an exemplary embodiment of the present invention.

Referring to FIG. 16, the flexible display may be modified in various shapes based on a duration of a period of an AC driving voltage provided to an IPMC layer.

A shape 1610 of the flexible display caused by an AC driving voltage with a relatively long period 1620 is provided, a shape 1630 of the flexible display caused by an AC driving voltage with a relatively moderate period 1640 is provided, and a shape 1650 of the flexible display caused by an AC driving voltage with a relatively short period 1660 is provided, and as shown, these shapes are different from each other.

If a phone call is received, and the phone call is associated with a basic group, movement of a flexible display may be regarded as a basic movement. If a period of a phone call from a reference group is received, the reference group may be set to cause the flexible display movement to differ from a phone call received from a basic group, such as making the movement of the flexible display faster or slower than the basic movement. Therefore, the movement of the flexible display may enable the user to intuitively recognize a group corresponding to a phone call. If the flexible display control apparatus provides an AC driving voltage to one of the columns of the IPMC layer, and provides, to a column immediately adjacent to that column, an AC driving voltage having a phase 180 degrees different from the previous AC driving voltage, the flexible display may be modified as though the flexible display as waves flowing up and down.

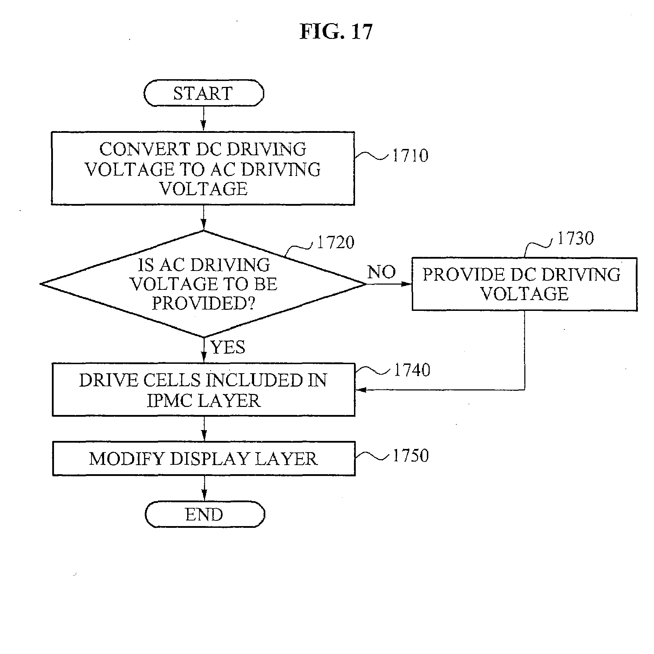

FIG. 17 illustrates a flexible display control method according to an exemplary embodiment of the present invention.

In operation 1710, the flexible display control apparatus may convert a DC driving voltage to an AC driving voltage. The flexible display control apparatus may convert the DC driving voltage to the AC driving voltage having a specific period. A peak-to-peak level of the AC driving voltage may be equivalent to a level of the DC driving voltage.

In operation 1720, the flexible display control apparatus may determine whether to provide the AC driving voltage to an IPMC layer. The flexible display control apparatus may determine whether to provide the AC driving voltage based on whether a displacement restoration occurs in the IPMC layer. The IPMC layer may be an ionic layer.

The flexible display control apparatus may provide AC driving voltage that has a period faster than the motion of the ions, so as to change the voltage applied to the cells of the IPMC layer without changing the physical arrangement of the IPMC layer, and thus, may minimize the displacement restoration in the IPMC layer.

In operation 1730, if the flexible display control apparatus determines not to provide the AC driving voltage to the IPMC layer, the flexible display control apparatus may provide the DC driving voltage. The flexible display control apparatus may provide the DC driving voltage continuously if a displacement restoration does not occur.

In operation 1740, the flexible display control apparatus may drive cells included in the IPMC layer, based on the AC driving voltage or the DC driving voltage provided to the IPMC layer. If the cells move, the IPMC layer may be modified.

In operation 1750, the flexible display control apparatus may modify a display layer based on the driven cells. As explained above, the selective application of voltage on various cells of the IPMC layer causes the shape of the IPMC layer to be modified, therefore allowing the display layer to also be modified accordingly.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM discs and DVD; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A flexible display control apparatus includes a direct current-to-alternating current (DC-AC) converter to convert a DC driving voltage to an AC driving voltage having a period, a controller to determine whether to provide the DC driving voltage or the AC driving voltage to an ionic layer,a driving unit to drive cells included in the ionic layer based on the provided DC driving voltage or the AC driving voltage, and a display having a shape that is modified to correspond to an input according to the driven cells.

## Claims

1. A control apparatus to control a flexible display, comprising:
a voltage production arrangement adapted to produce a first voltage and a second voltage;
a switch unit adapted to determine a driving voltage from either the first voltage or the second voltage; and
a driving unit adapted to drive the flexible display with the driving voltge,
wherein the flexible display has a shape modifiable by the driving voltage.

2. The apparatus according to claim 1, wherein the flexible display comprises an ionic polymer-metal composite.

3. The apparatus according to claim 1 or 2, wherein the flexible display comprises a matrix of cells, with each cell individually drivable by the driving voltage.

4. The apparatus according to one of claims 1 to 3, wherein the switch unit determines the driving voltage based on a characteristic of the input, wherein preferably the characteristic is one of a duration of the input, a time between the input and a successive input, and a phase of the input.

5. The apparatus of one of claims 1 to 4, said voltage production arrangement comprising:
a direct current (DC)-DC converter unit to process an input and to produce DC voltage, and
a DC-alternating current (AC) converter unit to convert the produced DC voltage to AC voltage;
wherein said switch unit is adapted to determine a driving voltage from either the DC voltage or the AC voltage.

6. The apparatus according to claim 5, wherein the switch unit determines that the driving voltage is the AC voltage in response to a request to prevent deformation restoration.

7. The apparatus according to claim 5 or 6, wherein the DC-AC converter unit sets a period of the AC voltage to be faster than a speed of motion of ions of the flexible display.

8. The apparatus according to claim 5 or 6, wherein the DC-AC converter unit sets a period of the AC voltage to be slower than a speed of motion of ions of the flexible display.

9. The apparatus according to one of claims 5 to 8, further comprising:
a memory unit to store a reference period corresponding to a specific input,
wherein the DC-AC converter unit sets a period of the AC voltage as the reference period in response to the input corresponding to the specific input.

10. The apparatus of claim 1 or 2, said voltage production arrangement comprising:
a first voltage unit to process an input and to produce a first voltage,
and
a second voltage unit to produce a second voltage, the second voltage having a different period than the first voltage;
wherein said switch unit is adapted to determine a driving voltage from either the first voltage or the second voltage.

11. A method for controlling a flexible display, comprising:
determining to apply a first voltage or a second voltage to the flexible display; and
applying the first voltage or the second voltage as an applied voltage,
wherein the flexible display has a shape modifiable by the applied voltage;
wherein preferably the flexible display comprises a matrix of cells, with each cell individually drivable by the applied voltage;
or/and
wherein preferably the flexible display comprises an ionic polymer-metal composite.

12. The method of claim 11, comprising:
converting an input and producing direct current (DC) voltage from the input;
converting the DC voltage to alternating current (AC) voltage;
determining to apply the DC voltage or the AC voltage to the flexible display; and
applying the DC voltage or the AC voltage as said applied voltage.

13. The method according to claim 11 or 12,
wherein the determining is based on a characteristic of the input, wherein preferably the characteristic is one of a duration of the input, a time between the input and a successive input, and a phase of the input,
or/and
wherein a/the AC voltage is applied in response to a request to prevent deformation restoration.

14. The method according to one of claims 11 to 13,
further comprising setting a period of a/the AC voltage to be faster than a speed of motion of ions of the flexible display,
or
further comprising setting a period of a/the AC voltage to be slower than a speed of motion of ions of the flexible display.

15. The method according to one of claims 11 to 14, further comprising:
storing a reference period corresponding to a specific input; and
setting a period of the AC voltage as the reference period in response to the input corresponding to the specific input.
